# EUROPÄISCHE PATENTANMELDUNG

(11) **EP 2 871 542 A1**
(43) Veröffentlichungstag der Anmeldung: **13.05.2015**
(21) Anmeldenummer: 14003286.3
(22) Anmeldetag: 23.09.2014
(51) Int. Cl.: G05B 19/042, G06F 3/0482

(54) **Werkzeug zur Konfigurierung einer frei programmierbaren Steuerungseinrichtung**

(30) Priorität: 24.09.2013 DE 102013015925
(71) Anmelder: ABB Technology AG, 8050 Zürich (CH)
(72) Erfinder: Wagener, Dirk, 31655 Stadthagen (DE); Welte, Christoph, 89233 Neu-Ulm (DE); Heege, Marcus, 56759 Kaisersesch (DE); Mahnke, Wolfgang, 67310 Hettenleidelheim (DE); Schlüter, Marko, 32339 Espelkamp (DE)
(74) Vertreter: Marks, Frank

(57) **Zusammenfassung**

Die Erfindung betrifft ein Werkzeug zur Konfigurierung einer frei programmierbaren Steuerungseinrichtung (1) für die Integration von intelligenten Feldgeräten (11 bis 13) in ein Steuerungs- oder Automatisierungssystem (1') mit einer flexibel ausbaubaren Hardwarestruktur, bei dem gerätebezogene Informationen als Objekte (1 bis 11322) einer verzweigten Baumstruktur visualisiert werden. Zur Verbesserung der Benutzerfreundlichkeit wird vorgeschlagen, einem hierarchisch übergeordneten Objekt (11) eine Objektliste (2) zuzuordnen, welcher hierarchisch untergeordneten Objekte (1112, 11212, 1123, 11321) zuweisbar sind, wobei zwischen dem hierarchisch übergeordneten Objekt (11) und jedem hierarchisch untergeordneten Objekt (1112, 11212, 1123, 11321) in der Objektliste mindestens eine weitere Hierarchieebene angeordnet ist. Bei Aktivierung des hierarchisch übergeordneten Objekts (11) ist ein beliebiges, hierarchisch untergeordnetes Objekt (1112, 11212, 1123, 11321) aus der Objektliste (2) auswählbar.

## Beschreibung

Die Erfindung betrifft ein Werkzeug zur Konfigurierung einer frei programmierbaren Steuerungseinrichtung für die Integration von intelligenten Feldgeräten in ein Steuerungs- oder Automatisierungssystem mit einer flexibel ausbaubaren Hardwarestruktur gemäß Anspruch 1. Die Erfindung findet insbesondere Verwendung in der Prozessautomation oder Maschinensteuerung zum Steuern von Prozessen und/oder Anlagenkomponenten.

Automatisierungssysteme zur Steuerung eines technischen Prozesses oder einer technischen Anlage umfassen üblicherweise eine Steuerungseinrichtung (SPS), die in einem Verbund einer Vielzahl von intelligenten elektrischen Geräten, auch Intelligent Electronic Devices (IED) genannt, integriert werden. Intelligente elektronische Geräte sind mikroprozessorbasierte Geräte wie beispielsweise Schutz- und Steuergeräte, Motorschutzgeräte, intelligente Schalter und Spannungsregler, Frequenzumrichter, Druck- und Temperaturmessumformer, Durchflussmesser und Stellantriebe.

Die Kommunikation zwischen der Steuereinrichtung und den intelligenten elektrischen Geräten (IED) wird üblicherweise mittels eines Kommunikationsprotokolls, vorzugsweise über den Kommunikationsstandard IEC 61850 ausgeführt und ist beispielsweise in der EP 1 976 281 A1 beschrieben. Zum Datenaustausch innerhalb des Systems ist es erforderlich, die Geräte (IED's) mittels eines Programmierwerkzeuges oder Programmiergerätes, auch Engineering Tool genannt, zu konfigurieren und die Geräte in das nach dem ICE 61850 Standard arbeitende Kommunikationsnetzwerk einzubinden.

Um Information zwischen den Geräten, aus welchen das Steuerungs- oder Automatisierungssystem gebildet wird, auszutauschen also Daten zwischen Funktionen auszutauschen, welche in den Geräten implementiert sind, werden zunächst die Kommunikationsknoten als der kleinste Teil einer Funktion, welche Daten mit anderen Funktionen austauscht, betrachtet. Diese logischen Knoten führen Teilfunktionen für die Gesamtfunktion aus und können einzeln oder zusammen in Geräten implementiert sein.

Aus der DE 101 17 459 A1 ist ein Verfahren und eine Vorrichtung zur Gewinnung von Diagnoseinformationen bekannt, die sich eines Engineeringwerkzeugs bedient, welches die gerätebezogene Informationen als Objekte einer mehrfach verzweigten Baumstruktur in hierarchischer Anordnung visualisiert. In dieser Baumstruktur hat der Anwender Zugriff auf Parameter und Menüs, um das Gerät einzustellen sowie Diagnosen oder andere Funktionen auszuführen.

In der Praxis hat sich herausgestellt, dass einige dieser Parameter oder Menüs vergleichsweise häufig geändert werden und andere vergleichsweise selten. Darüber hinaus wird als nachteilig empfunden, dass bestimmte Parameter oder Menüs in der mehrfach verzweigten Baumstruktur sehr verschachtelt und insbesondere für den ungeübten Anwender nicht einfach zu finden sind.

Der Erfindung liegt daher die Aufgabe zugrunde, die Benutzerfreundlichkeit des bekannten Engineeringwerkzeugs zu erhöhen.

Erfindungsgemäß wird diese Aufgabe mit den Merkmalen des Patentanspruchs 1 erfüllt. Vorteilhafte Ausgestaltungen der Erfindung sind in den rückbezogenen Ansprüchen sowie der Beschreibung angegeben.

Die Erfindung geht aus von einem Werkzeug zur Konfigurierung einer frei programmierbaren Steuerungseinrichtung für die Integration von intelligenten Feldgeräten in ein Steuerungs- oder Automatisierungssystem mit einer flexibel ausbaubaren Hardwarestruktur, bei dem gerätebezogene Informationen als Objekte einer mehrfach verzweigten Baumstruktur hierarchisch angeordnet sind und visualisiert werden.

Erfindungsgemäß ist einem hierarchisch übergeordneten Objekt eine Objektliste zugeordnet, welcher hierarchisch untergeordneten Objekte zuweisbar sind, wobei zwischen dem hierarchisch übergeordneten Objekt und jedem hierarchisch untergeordneten Objekt in der Objektliste mindestens eine weitere Hierarchieebene angeordnet ist. Die dem übergeordneten Objekt zugeordnete Objektliste wird bei dessen Aktivierung angezeigt. Dabei ist ein beliebiges, hierarchisch untergeordnetes Objekt auswählbar.

In der mehrfach verzweigten Baumstruktur hierarchisch angeordneter Objekte wird bei Aktivierung eines Objekts die ihm zugeordnete Objektliste angezeigt, in der die hierarchisch untergeordneten Objekte zur Auswahl angeboten werden.

Vorzugsweise sind die häufig benutzten, hierarchisch untergeordneten Objekte der Objektliste des hierarchisch übergeordneten Objekts zugewiesen. Vorteilhafterweise befinden sich damit die häufig benutzten, hierarchisch untergeordneten Objekte im direkten Zugriff des Bedieners des Werkzeugs. Dadurch entfallen alle Zwischenschritte zur Auswahl und Aktivierung von Objekten, die in der mehrfach verzweigten Baumstruktur zwischen dem übergeordneten Objekt und den untergeordneten Objekt in der Objektliste hierarchisch angeordnet sind. Die Bedienung des Werkzeugs wird folglich vereinfacht. Darüber hinaus entfällt für alle häufig benutzten, hierarchisch untergeordneten Objekte die aufwändige Suche sowohl in den Verzweigungen der mehrfach verzweigten Baumstruktur als auch in einer ausgewählten Hierarchieebene derselben.

Nach einem weiteren Merkmal der Erfindung ist mindestens ein untergeordnetes Objekt aus der Objektliste ausgebildet, auf weitere, diesem Objekt untergeordnete Objekte zu verweisen. Das Objekt aus der Objektliste stellt ein Menü dar, dass den direkten Zugriff auf diesem Objekt untergeordnete Objekte ermöglicht und zwar unter Umgehung aller Hierarchiestufen, die zwischen dem übergeordneten und dem untergeordneten Objekt in der Baumstruktur angeordnet sind.

Nach einem weiteren Merkmal der Erfindung ist mindestens ein untergeordnetes Objekt aus der Objektliste ein Parameter, dem hierarchisch keine weiteren Objekte untergeordnet sind. Somit ist ein solcher Parameter des übergeordneten Objekts im direkten Zugriff unter Umgehung aller Hierarchiestufen, die zwischen dem übergeordneten und dem untergeordneten Objekt in der Baumstruktur angeordnet sind.

Nach einem weiteren Merkmal der Erfindung weist dieselbe Objektliste untergeordnete Objekte auf, welche auf weitere, diesem Objekt untergeordnete Objekte zu verweisen, und Parameter, dem hierarchisch keine weiteren Objekte untergeordnet sind.

Der Objektliste sind sowohl Menüs als auch Parameter gemischt zuweisbar. Vorteilhafterweise ist die Objektliste nicht auf einen bestimmten Objekttyp beschränkt sondern universell auf die häufig benutzten, hierarchisch untergeordneten Objekte anpassbar.

Nach einem weiteren Merkmal der Erfindung weist dieselbe Objektliste untergeordnete Objekte verschiedener Hierarchieebenen auf. Vorteilhafterweise ist die Objektliste nicht auf eine bestimmte Hierarchieebene beschränkt sondern universell auf die häufig benutzten, hierarchisch untergeordneten Objekte unabhängig vom hierarchischen Ort in der Baumstruktur anpassbar.

Nach einem weiteren Merkmal der Erfindung ist die Objektliste des hierarchisch übergeordneten Objekts voreinstellbar. Vorteilhafterweise wird der Anwender des Werkzeugs von dem Aufwand freigehalten, selbst die unterordneten Objekte in der Baumstruktur aufzufinden und der Objektliste zuzuweisen.

Nach einem weiteren Merkmal der Erfindung ist die Objektliste des hierarchisch übergeordneten Objekts gerätespezifisch voreingestellt. Vorteilhafterweise sind dabei verschiedenen gleichartigen Geräte als hierarchisch übergeordnete Objekt, bei denen sich die häufig benutzten Parameter oder Menüs wegen differierender Aufgaben in dem Steuerungs- oder Automatisierungssystem unterscheiden, verschiedene hierarchisch untergeordnete Objekte zuweisbar.

Nach einem weiteren Merkmal der Erfindung ist die Objektliste des hierarchisch übergeordneten Objekts gerätetypspezifisch voreingestellt. Unter der Annahme, dass für gleichartige Geräte desselben Gerätetyps auch dieselben Parameter oder Menüs in gleicher Häufigkeit benutzt werden, ist es vorteilhaft, die Objektliste bezogen auf einen bestimmten Gerätetyp voreinzustellen.

Nach einem weiteren Merkmal der Erfindung ist die Objektliste des hierarchisch übergeordneten Objekts benutzerspezifisch voreingestellt. Vorteilhafterweise findet jeder Benutzer des Werkzeugs seine Objektliste, mit dem von ihm häufig benutzten Parameter oder Menüs auch dann vor, wenn zwischenzeitlich andere Benutzer mit dem Werkzeug gearbeitet haben, welche andere Parameter oder Menüs häufig benutzten.

Nach einem weiteren Merkmal der Erfindung ist die Objektliste des hierarchisch übergeordneten Objekts benutzergruppenspezifisch voreingestellt. In umfangreichen Steuerungs- oder Automatisierungssystemen verwenden verschiedene Benutzergruppen das Werkzeug zur Erledigung unterschiedlicher Aufgaben, mit verschiedener Häufigkeit der Benutzung von Parameter oder Menüs. Vorteilhafterweise ist jeder Benutzergruppe eine Objektliste mit genau den Parameter oder Menüs zuweisbar, die die Erfüllung ihrer Aufgabe unterstützt und die sich von Objektlisten anderer Benutzergruppen zweckmäßig unterscheidet.

Nach einem weiteren Merkmal der Erfindung ist die Objektliste des hierarchisch übergeordneten Objekts arbeitsplatzspezifisch voreingestellt.

Vorteilhafterweise findet der Benutzer des Werkzeugs an einem bestimmten Arbeitsplatz immer eine bestimmte Objektliste mit den Parameter oder Menüs vor, die an diesem Arbeitsplatz häufig benutzt werden.

Nach einem weiteren Merkmal der Erfindung ist die Objektliste des hierarchisch übergeordneten Objekts auf ein anderes hierarchisch übergeordnetes Objekt übertragbar. Vorteilhafterweise lässt sich hierdurch der Geltungsbereich einer Objektliste erweitern oder einschränken.

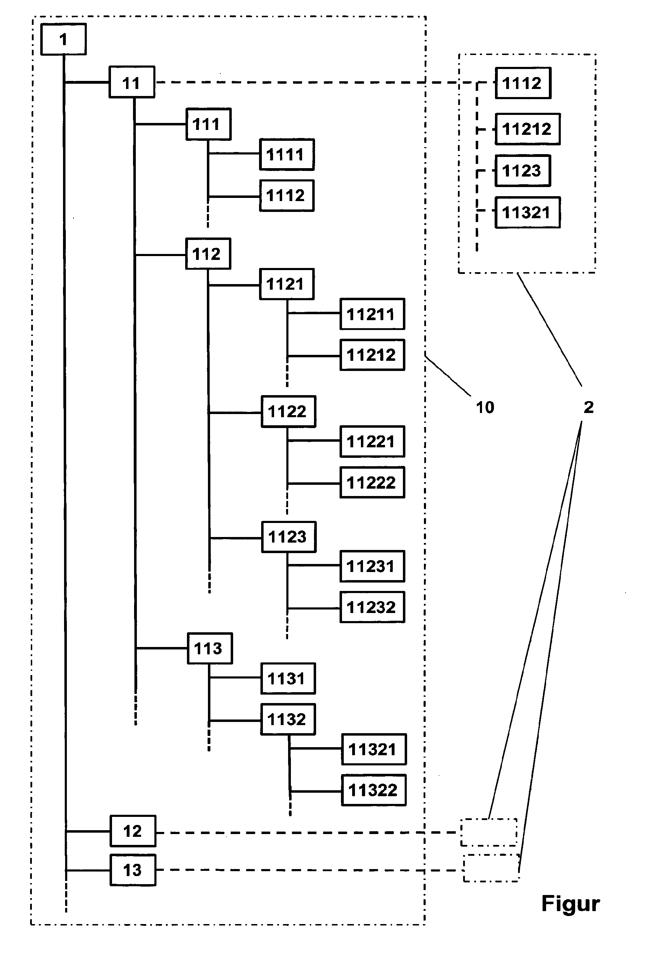

Die Erfindung wird nachstehend anhand eines Ausführungsbeispiels näher erläutert. In der einzigen Figur ist eine für sich bekannte, mehrfach verzweigten Baumstruktur dargestellt, in der die Objekte **1** bis **11322** eines Steuerungs- oder Automatisierungssystemen **1'** in einem Werkzeug zur Konfigurierung einer frei programmierbaren Steuerungseinrichtung **1** für die Integration von intelligenten Feldgeräten **11** bis **13** in das Steuerungs- oder Automatisierungssystem **1'** in verschiedenen Hierarchieebenen angeordnet sind.

Die Objekte **1** bis **11322** weisen ein- bis fünfstellige Objektbezeichner, wobei Stellenzahl der Objektbezeichner die Hierarchieebene angibt. Die höchste Hierarchieebene hat demnach einstellige Objektbezeichner und die niedrigste Hierarchieebene hat fünfstellige Objektbezeichner. Je nach Umfang des Steuerungs-oder Automatisierungssystemen **1'** können sechste und weitere Hierarchieebenen vorgesehen sein.

Die erste Hierarchieebene, die Steuerungsebene, des Steuerungs- oder Automatisierungssystems **1' weist** mindestens ein Objekt 1 auf, welches durch eine Steuerungseinrichtung **1** gebildet ist.

An die Steuerungseinrichtung 1 sind die Feldgeräte **11, 12, 13** usw. angeschlossen, welche die Objekte **11, 12, 13** usw. der zweite Hierarchieebene, die Geräteebene, des Steuerungs- oder Automatisierungssystemen **1'** bilden.

Die Feldgeräte **11, 12, 13** usw. weisen eine Vielzahl von Eigenschaften auf, welche als Parameter **1111, 1112, 11211** bis **11232, 1131** sowie **11321** und **11322** gruppiert in Menüs **111, 112, 113** und Untermenüs **1121** bis **1123** sowie **1132** auswählbar und aktivierbar sind.

Die Parameter **1111, 1112, 11211** bis **11232, 1131** sowie **11321** und **11322** sind Objekte, welchen hierarchisch keine weiteren Objekte untergeordnet sind. Die Menüs **111, 112, 113** sind Objekte, denen hierarchisch weitere Objekte untergeordnet sind, welche Untermenüs **1121** bis **1123** sowie **1132** sowie oder Parameter **1111, 1112, 1131** sein können. Die Untermenüs **1121** bis **1123** sowie **1132** sind Objekte, denen hierarchisch weitere Objekte untergeordnet sind, nämlich die Parameter **11211** bis **11322.**

Dabei sind die Menüs **111, 112, 113** auf der dritten Hierarchieebene und die Untermenüs **1121** bis **1123** und **1132** auf der vierten Hierarchieebene angeordnet. Die Parameter **1111, 1112, 11211** bis **11232, 1131** sowie **11321** und **11322** sind je nach Anzahl und Sachzugehörigkeit auf verschiedenen Hierarchieebenen untergebracht. So sind die Parameter **1111, 1112** und **1131** sind auf der vierten Hierarchieebene unter den Menü **111** und die Parameter **11211** bis **11322** auf der fünften Hierarchieebene unter den Untermenüs **1121** bis **1123** und **1132** angeordnet.

Um in der bekannten, mehrfach verzweigten Baumstruktur des Steuerungs- oder Automatisierungssystems **1'** zum Parameter **11321** zu gelangen, ist ausgehend von der Steuerungseinrichtung 1 in einem ersten Schritt das Feldgerät **11** auszuwählen. In einem zweiten Schritt ist das Menü **113** und in einem dritten Schritt das Untermenü **1132** auszuwählen. Erst im vierten Schritt wird der Parameter **11321** erreicht.

Erfindungsgemäß ist in dem Werkzeug zur Konfigurierung einer frei programmierbaren Steuerungseinrichtung 1 für die Integration von intelligenten Feldgeräten **11** bis **13** in das Steuerungs- oder Automatisierungssystem **1'** einem Feldgerät 11 eine Objektliste **2** zugeordnet, welcher hierarchisch untergeordnete Parameter **1112, 11212, 11321** und Untermenüs **1123** zugewiesen sind, wobei zwischen dem Feldgerät 11 und jedem hierarchisch untergeordneten Parameter **1112, 11212, 11321** und Untermenü **1123** in der Objektliste **2** mindestens eine weitere Hierarchieebene angeordnet ist.

Um zum Parameter **11321** zu gelangen, ist ausgehend von der Steuerungseinrichtung **1** in einem ersten Schritt das Feldgerät **11** auszuwählen. Bereits im zweiten Schritt wird aus der dem Feldgerät **11** zugeordneten Objektliste 2 der Parameter **11321** erreicht. Die Anzahl der nötigen Schritte ist gegenüber der Suche in der bekannten, mehrfach verzweigten Baumstruktur halbiert.

Vorteilhafterweise sind in dem Werkzeug zur Konfigurierung einer frei programmierbaren Steuerungseinrichtung **1** für die Integration von intelligenten Feldgeräten **11** bis **13** in das Steuerungs- oder Automatisierungssystem **1'** die häufig benutzten Parameter **1112, 11212, 11321** und/oder Menüs/Untermenüs **1123** unmittelbar den jeweiligen Feldgeräten **11** bis **13** zugeordnet und für den Benutzer schnell und komfortabel erreichbar.

Die häufig benutzten Parameter **1112, 11212, 11321** und/oder Untermenüs **1123** der Objektliste **2** sind voreinstellbar. Diese Voreinstellung kann sich auf ein einzelnes Feldgerät **11** bis **13,** auf einen Feldgerätetyp, auf einen Benutzer, auf eine Benutzergruppe oder einen Arbeitsplatz beziehen.

Darüber hinaus ist der Umfang der Objektliste **2** des jeweiligen Feldgeräts **11** bis **13** durch den Benutzer einstellbar. Dazu wählt der Benutzer den gewünschten untergeordnete Objekt **1111** bis **11322,** welches ein Parameter **1111, 1112, 11211** bis **11232, 1131** sowie **11321** und **11322** oder ein Untermenü **1121** bis **1123** sowie **1132** sein kann, aus und markiert es als Favorit. Damit ist dieses Objekt **1111** bis **11322** der Objektliste 2 zugeordnet. Umgekehrt kann der Benutzer die Markierung jedes Objekts **1112, 11212, 1123, 11321** der Objektliste **2** als Favorit entfernen. Damit ist dieses Objekt **1112, 11212, 1123, 11321** nicht mehr der Objektliste **2** zugeordnet und wird in dem Werkzeug zur Konfigurierung einer frei programmierbaren Steuerungseinrichtung **1** für die Integration von intelligenten Feldgeräten **11** bis **13** in das Steuerungs- oder Automatisierungssystem **1'** nicht mehr in der Objektliste **2** des Feldgeräts **11** bis **13** angezeigt.

In weiterer Ausgestaltung der Erfindung ist die Objektliste **2** des Feldgeräts **11** auf ein anderes Feldgerät **12, 13** übertragbar. Damit werden der Geltungsbereich der Zuweisungen zu der Objektliste **2,** insbesondere nach deren Änderung, des Feldgeräts **11** für ein anderes Feldgerät **12, 13** wirksam.

### Bezugszeichenliste

- 1 bis 11322: Objekt
- 1': Steuerungs- oder Automatisierungssystem
- 2: Objektliste

## Patentansprüche

1. Werkzeug zur Konfigurierung einer frei programmierbaren Steuerungseinrichtung (1) für die Integration von intelligenten Feldgeräten (11 bis 13) in ein Steuerungs-oder Automatisierungssystem (1') mit einer flexibel ausbaubaren Hardwarestruktur, bei dem gerätebezogene Informationen als Objekte (1 bis 11322) einer mehrfach verzweigten Baumstruktur hierarchisch angeordnet sind und visualisiert werden, **dadurch gekennzeichnet,**
- **dass** einem hierarchisch übergeordneten Objekt (11) eine Objektliste (2) zugeordnet ist, welcher hierarchisch untergeordneten Objekte (1112, 11212, 1123, 11321) zuweisbar sind, wobei zwischen dem hierarchisch übergeordneten Objekt (11) und jedem hierarchisch untergeordneten Objekt (1112, 11212, 1123, 11321) in der Objektliste (2) mindestens eine weitere Hierarchieebene angeordnet ist, und
- **dass** bei Aktivierung des hierarchisch übergeordneten Objekts (11) ein beliebiges, hierarchisch untergeordnetes Objekt (1112, 11212, 1123, 11321) aus der Objektliste (2) auswählbar ist.

2. Werkzeug nach Anspruch 1
**dadurch gekennzeichnet,**
**dass** mindestens ein untergeordnetes Objekt (1123) aus der Objektliste (2) ausgebildet ist, auf weitere, diesem Objekt (1123) untergeordnete Objekte (11231, 11232) zu verweisen.

3. Werkzeug nach Anspruch 1
**dadurch gekennzeichnet,**
**dass** mindestens ein untergeordnetes Objekt (1112, 11212, 11321) aus der Objektliste (2) ein Parameter ist, dem hierarchisch keine weiteren Objekte untergeordnet sind.

4. Werkzeug nach einem der Ansprüche 2 und 3
**dadurch gekennzeichnet,**
**dass** dieselbe Objektliste (2) untergeordnete Objekte (1123), welche auf weitere, diesem Objekt (1123) untergeordnete Objekte (11231, 11232) verweisen, und Parameter (1112, 11212, 11321) aufweist, dem hierarchisch keine weiteren Objekte untergeordnet sind.

5. Werkzeug nach einem der Ansprüche 2 bis 4
**dadurch gekennzeichnet,**
**dass** dieselbe Objektliste (2) untergeordnete Objekte (1112/1123, 11212/11321) verschiedener Hierarchieebenen aufweist.

6. Werkzeug nach einem der Ansprüche 1 bis 5
**dadurch gekennzeichnet,**
**dass** die Objektliste (2) des hierarchisch übergeordneten Objekts (11) voreinstellbar ist.

7. Werkzeug nach Anspruch 6
**dadurch gekennzeichnet,**
**dass** die Objektliste (2) des hierarchisch übergeordneten Objekts (11) gerätespezifisch voreingestellt ist.

8. Werkzeug nach Anspruch 6
**dadurch gekennzeichnet,**
**dass** die Objektliste (2) des hierarchisch übergeordneten Objekts (11) gerätetypspezifisch voreingestellt ist.

9. Werkzeug nach Anspruch 6
**dadurch gekennzeichnet,**
**dass** die Objektliste (2) des hierarchisch übergeordneten Objekts (11) benutzerspezifisch voreingestellt ist.

10. Werkzeug nach Anspruch 6
**dadurch gekennzeichnet,**
**dass** die Objektliste (2) des hierarchisch übergeordneten Objekts (11) benutzergruppenspezifisch voreingestellt ist.

11. Werkzeug nach Anspruch 6
**dadurch gekennzeichnet,**
**dass** die Objektliste (2) des hierarchisch übergeordneten Objekts (11) arbeitsplatzspezifisch voreingestellt ist.

12. Werkzeug nach einem der vorstehenden Ansprüche
**dadurch gekennzeichnet,**
**dass** die Objektliste (2) des hierarchisch übergeordneten Objekts (11) auf ein anderes hierarchisch übergeordnetes Objekt (12, 13) übertragbar ist.
